Europäisches Patentamt

European Patent Office

Office européen des brevets

(19)

(11) **EP 1 399 246 B1**

(12) **EUROPÄISCHE PATENTSCHRIFT**

(45) Veröffentlichungstag und Bekanntmachung des Hinweises auf die Patenterteilung:
**25.05.2005 Patentblatt 2005/21**

(21) Anmeldenummer: **02748747.9**

(22) Anmeldetag: **07.06.2002**

(51) Int Cl.⁷: **B01D 53/94**, B01J 23/652, B01J 23/30

(86) Internationale Anmeldenummer:
**PCT/EP2002/006266**

(87) Internationale Veröffentlichungsnummer:
**WO 2002/100520 (19.12.2002 Gazette 2002/51)**

(54) **REDOX-KATALYSATOR FÜR DIE SELEKTIVE KATALYTISCHE REDUKTION SOWIE VERFAHREN ZU SEINER HERSTELLUNG**

REDOX-CATALYST FOR SELECTIVE CATALYTIC REDUCTION AND METHOD FOR THE PRODUCTION THEREOF

CATALYSEUR REDOX POUR LA REDUCTION CATALYTIQUE SELECTIVE ET PROCEDE DE FABRICATION DUDIT CATALYSEUR

(84) Benannte Vertragsstaaten:
**AT BE CH CY DE DK ES FI FR GB GR IE IT LI LU MC NL PT SE TR**

(30) Priorität: **09.06.2001 EP 01114096**

(43) Veröffentlichungstag der Anmeldung:
**24.03.2004 Patentblatt 2004/13**

(73) Patentinhaber: **Umicore AG & Co. KG**
**63457 Hanau-Wolfgang (DE)**

(72) Erfinder:
• **DEMEL, Yvonne**
**60386 Frankfurt (DE)**
• **KREUZER, Thomas**
**61184 Karben (DE)**
• **LOX, Egbert**
**36355 Hochwaldhausen (DE)**
• **SCHÄFER-SINDLINGER, Adolf**
**60489 Frankfurt (DE)**
• **SPURK, Paul**
**64732 Bad König (DE)**
• **VAN DEN TILLAART, Hans**
**NL-5871 C Brockhuizenvorst (NL)**

(74) Vertreter: **VOSSIUS & PARTNER**
**Siebertstrasse 4**
**81675 München (DE)**

(56) Entgegenhaltungen:
**EP-A- 0 208 434       EP-A- 0 410 440**
**EP-A- 0 544 282       DE-C- 19 806 266**
**US-A- 5 292 704**

**Beschreibung**

Die Erfindung betrifft einen Redox-Katalysator für die selektive katalytische Reduktion der im Abgas von Dieselmotoren enthaltenen Stickoxide mittels Ammoniak, enthaltend einen Reduktionskatalysator, dessen katalytisch aktive Masse auf dem Feststoffsäure-System $TiO_2/WO_3/MoO_3/V_2O_5/SiO_2/SO_3$ basiert und einen Oxidationskatalysator auf der Basis der Platingruppenmetalle Platin und Palladium, wobei der Reduktionskatalysator in Form eines zylindrischen Wabenkatalysators mit einer Eintritts- und einer Austrittsstirnfläche vorliegt und der Oxidationskatalysator auf einem der Austrittsstirnfläche benachbarten Abschnitt des Reduktionskatalysators aufgebracht ist.

Das Verfahren der selektiven katalytischen Reduktion wird im folgenden als SCR-Verfahren (Selective Catalytic Reduction) bezeichnet. Gemäß dem SCR-Verfahren werden die Stickoxide im Sauerstoff enthaltenden Abgas eines Dieselmotors an einem Reduktionskatalysator (SCR-Katalysator) mit Ammoniak selektiv reduziert. Das Verfahren wurde für die stationäre Abgasreinigung entwickelt und wird seit Jahren erfolgreich in der Rauchgasreinigung von Kraftwerken und Blockheizkraftwerken angewendet.

Ammoniak ist aufgrund seiner Eigenschaften im mobilen Bereich äußerst schlecht anwendbar. Daher wird hier Ammoniak nicht direkt eingesetzt, sondern aus einer Ammoniak spendenden Verbindung, wie zum Beispiel Harnstoff, gewonnen. Hierzu wird Harnstoff entweder thermisch oder mit Hilfe eines Harnstoff-Hydrolyse-Katalysators zu Ammoniak zersetzt, welcher am Reduktionskatalysator mit den Stickoxiden zu Wasser und Stickstoff umgesetzt wird. Für die vorliegende Erfindung ist die Herkunft des Ammoniaks ohne Bedeutung. Wenn im folgenden von der Dosierung des Ammoniaks die Rede ist, so beinhaltet das auch entsprechende Maßnahme für die Dosierung und Zersetzung des Harnstoffs.

Das SCR-Verfahren ermöglicht eine Minderung der Stickoxide im Abgas von Dieselmotoren von mehr als 70%. Ein Problem des SCR-Verfahrens stellt die genaue Dosierung des Ammoniaks dar. Bei den derzeit bekannten Dosiersystemen für Ammoniak handelt es sich um gesteuerte und nicht geregelte Systeme. Die Steuerung der Zugabe von Ammoniak erfolgt dabei zum Beispiel auf der Basis von im Motorkennfeld hinterlegten Daten.

Im dynamischen Fahrbetrieb kann es leicht zu Überdosierungen kommen, die zu unerwünschten Emissionen von Ammoniak in die Umwelt führen (Ammoniak-Schlupf). Dieses Verhalten wird dadurch gemildert, daß ein SCR-Katalysator gewöhnlich ein gewisses Speichervermögen für Ammoniak besitzt. Unerwünschte Emissionen lassen sich jedoch unter bestimmten Betriebsbedingungen nicht vollständig vermeiden. Deshalb ist es bekannt, dem SCR-Katalysator einen sogenannten Ammoniak-Sperrkatalysator nachzuschalten. Es handelt sich dabei um einen Oxidationskatalysator, welcher Ammoniak zu Wasser und Stickstoff oxidiert und somit die unerwünschten Emissionen unterdrückt. Daneben oxidiert dieser Oxidationskatalysator auch noch die im Abgas enthaltenen Kohlenwasserstoffe und Kohlenmonoxid.

Bei den eingesetzten Katalysatoren handelt es sich gewöhnlich um zylinderförmige, monolithische Katalysatoren, die von einer Eintrittsstirnfläche zu einer Austrittsstirnfläche von achsenparallelen Strömungskanälen für das Abgas durchzogen werden. Sie werden auch als Wabenkatalysatoren bezeichnet. Sie können als sogenannte Vollkatalysatoren oder Beschichtungskatalysatoren ausgeführt sein. Vollkatalysatoren bestehen vollständig aus katalytisch aktiver Masse und werden durch Extrusion der katalytisch aktiven Masse zu Wabenkörpern gewonnen. Ihre Zelldichte (Anzahl der Strömungskanäle pro Querschnittsfläche) ist relativ gering und liegt in der Regel unter 5 $cm^{-2}$. Bei sogenannten Beschichtungskatalysatoren wird dagegen die katalytisch aktive Masse in Form einer dünnen Beschichtung (ca. 10 bis 100 μm Dicke) auf inerte Tragkörper aus Keramik oder Metall aufgebracht. Die inerten Tragkörper sind zumeist ebenfalls in Form von monolithischen Wabenkörpern aufgebaut. Ihre Zelldichte liegt im allgemeinen wesentlich höher als bei Vollkatalysatoren. Standdardmäßig sind Tragkörper mit Zelldichten von 62 $cm^{-2}$ im Einsatz. Tragkörper mit Zelldichten bis 300 $cm^{-2}$ sind in der Entwicklung.

In der EP 0 615 777 A1 wird ein für die selektive katalytische Reduktion der Stickoxide geeigneter Abgaskonverter beschrieben. Er enthält in Strömungsrichtung des Abgases zunächst eine Vorrichtung zur Dosierung des Harnstoffs, einen Harnstoff-Hydrolyse-Katalysator, einen SCR-Katalysator und einen unmittelbar nachgeschalteten Oxidationskatalysator. Auch die US 5,628,186 beschreibt ein solches System. In beiden Fällen sind SCR-Katalysator und Oxidationskatalysator voneinander getrennte Körper, die im Abgasreinigungskonverter separat gehaltert werden müssen. Die Kosten für einen Abgasreinigungskonverter aus zwei getrennten Katalysatorkörpern sind relativ hoch. Außerdem erhöht sich durch den zweiten Katalysatorkörper der Abgasgegendruck und damit der Kraftstoffverbrauch.

Eine andere Möglichkeit beschreibt die EP 0 410 440 B1. Gemäß dieser Schrift ist der Oxidationskatalysator als Beschichtung auf einem abströmseitigen Abschnitt des einstückigen als Vollextrudat in Wabenform ausgeführten Reduktionskatalysators aufgebracht, wobei der mit dem Oxidationskatalysator beschichtete Bereich 20 bis 50% des gesamten Katalysatorvolumens ausmacht. Der Oxidationskatalysator enthält als katalytisch aktive Komponenten wenigstens eines der Platingruppenmetalle Platin, Palladium und Rhodium, die auf Ceroxid, Zirkonoxid und Aluminiumoxid als Trägermaterialien abgeschieden sind.

Der kombinierte Reduktions/Oxidationskatalysator (Redox-Katalysator) gemäß der EP 0 410 440 B1 hat gegenüber der Verwendung von separaten Reduktions- und Oxidationskatalysatoren den Vorteil, daß der Aufwand für die Halterung des Katalysators gering gehalten werden kann. Allerdings ist die Notwendigkeit einer zusätzlichen Beschichtung auf einem im abströmseitigen Bereich liegenden Abschnitt des Reduktionskatalysators insbesondere bei hochzelligen Katalysatoren problematisch, da sich hierdurch der Abgasgegendruck erhöht und bei der Beschichtung Strömungskanäle verstopft werden können.

Es ist daher Aufgabe der vorliegenden Erfindung, einen einstückigen Redox-Katalysator anzugeben, der die Nachteile des Redox-Katalysators aus der EP 0 410 440 B1 nicht aufweist und sich besonders einfach herstellen läßt.

Diese Aufgabe wird gelöst durch einen Redox-Katalysator für die selektive katalytische Reduktion der im Abgas von Dieselmotoren enthaltenen Stickoxide mittels Ammoniak, welcher einen Reduktionskatalysator, dessen katalytisch aktive Masse auf dem Feststoffsäure-System $TiO_2/WO_3/MoO_3/V_2O_5/SiO_2/SO_3$ basiert, und einen Oxidationskatalysator auf der Basis der Platingruppenmetalle Platin und Palladium enthält, wobei der Reduktionskatalysator in Form eines zylindrischen Wabenkatalysators mit einer Länge L sowie mit einer Eintritts- und einer Austrittsstirnfläche vorliegt und der Oxidationskatalysator auf einem der Austrittsstirnfläche benachbarten Abschnitt des Reduktionskatalysators aufgebracht ist. Der Katalysator ist dadurch gekennzeichnet, daß die katalytisch aktive Masse des Reduktionskatalysators als Trägermaterial für die Platingruppenmetalle des Oxidationskatalysators dient.

Im Gegensatz zu der EP 0 410 440 B1 werden die katalytisch aktiven Komponenten nicht auf separaten Trägermaterialien wie zum Beispiel Aluminiumoxid aufgebracht, sondern sie werden direkt in einen abströmseitigen Abschnitt des Reduktionskatalysators eingebracht. Die katalytisch aktive Masse des Reduktionskatalysators wird also als Trägermaterial für die katalytisch aktiven Platingruppenmetalle verwendet. Es kann erfindungsgemäß auf eine separate Beschichtung des Reduktionskatalysators mit Trägermaterialien für die Platingruppenmetalle verzichtet werden.

Der mit dem Oxidationskatalysator beschichtete Bereich des Reduktionskatalysators dient als Ammoniak-Sperrkatalysator. An ihm wird der bei der selektiven katalytischen Reduktion nicht verbrauchte Ammoniak zu Stickstoff und Wasser gemäß der Reaktionsgleichung

$$2\,NH_3 + 1,5\,O_2 \rightarrow N_2 + 3\,H_2O$$

oxidiert. Damit die Oxidation möglichst vollständig abläuft, hat es sich als zweckmäßig erwiesen, die Länge des mit dem Oxidationskatalysator ausgerüsteten Abschnitts des Reduktionskatalysators zwischen 5 und 20% zu wählen. Eine zu geringe Länge führt zu einer nicht vollständigen Oxidation des Ammoniaks, so daß es weiterhin zu Durchbrüchen von Ammoniak kommen kann, während bei einer zu großen Länge des Oxidationskatalysators die Gefahr einer Überoxidation des Ammoniaks zu Distickstoffoxid (Lachgas) wächst.

Als Basis für den Redox-Katalysator kann ein Vollkatalysator verwendet werden, der als katalytisch aktive Masse ein Gemisch aus Feststoffsäuren wie $TiO_2/WO_3/MoO_3/V_2O_5/SiO_2/SO_3$ enthält. Bevorzugt wird jedoch als Basis für den Redox-Katalysator ein Reduktionskatalysator in Form einer Beschichtung auf einem inerten Tragkörper aus Keramik oder Metall verwendet. Diese Ausführungsform gestattet die Verwendung von hochzelligen Tragkörpern wie sie auch für konventionelle Dreiweg-Katalysatoren zum Einsatz kommen.

Zur Imprägnierung des abströmseitigen Abschnittes des Reduktionskatalysators mit den Platingruppenmetallen wird die Austrittsstirnfläche des Katalysators in eine Imprägnierlösung getaucht, die gelöste Vorläuferverbindungen der Platingruppenmetalle enthält. Nach dem Imprägnieren wird der Katalysator getrocknet und calciniert. Bevor nach diesem Verfahren der erfindungsgemäße Redox-Katalysator erhalten wurde, mußten jedoch erhebliche Schwierigkeiten überwunden werden, denn es zeigte sich, daß die katalytische Aktivität des Reduktionskatalysators durch Verunreinigungen mit Platin stark geschädigt wird. Nur unter Einhaltung bestimmter Bedingungen bei der Imprägnierung kann verhindert werden, daß die Einbringung der Platinmetalle in den abströmseitigen Abschnitt des Reduktionskatalysators die Reduktionsaktivität des Katalysators schädigt.

Als wichtigste Maßnahme ist die Auswahl geeigneter Vorläufersubstanzen für die Imprägnierung mit den Platingruppenmetallen zu nennen. Es zeigte sich, daß nur neutrale oder basische Imprägnierlösungen zum Erfolg führen. Die Tabellen 1 und 2 zeigen die pH-Werte einiger Platin- und Palladium-Imprägnierlösungen:

Tabelle 1:

| Platin-Lösungen | | |
|---|---|---|
| Platin-Vorläuferverbindung | Platin-Konzentration in der Imprägnierlösung [Gew.-%] | pH-Wert der Imprägnierlösung |
| $H_2PtCl_6 \cdot 6H_2O$ | 0,89 | 1,13 |
| $[Pt(NH_3)_4](NO_3)_2$ | 0,89 | 7,10 |

Tabelle 1: (fortgesetzt)

| Platin-Lösungen | | |
| --- | --- | --- |
| Platin-Vorläuferverbindung | Platin-Konzentration in der Imprägnierlösung [Gew.-%] | pH-Wert der Imprägnierlösung |
| $(EA)_2Pt(OH)_6$[*] | 0,89 | 9,72 |
| $[Pt(NH_3)_4](OH)_2$ | 0,89 | 12,81 |

[*] $(HO-C_2H_4-NH_3)_2 Pt(OH)_6$: Ethanolammoniumplatin (IV) Hexahydroxid

Tabelle 2:

| Palladium-Lösungen | | |
| --- | --- | --- |
| Palladium-Vorläuferverbindung | Palladium-Konzentration in der Imprägnierlösung [Gew.-%] | pH-Wert der Imprägnierlösung |
| $Pd(NO_3)_2$ | 0,49 | 1,26 |
| $Pd(NH_3)_2(NO_2)_2$ | 0,49 | 8,45 |
| $[Pd(NH_3)_4](NO_3)_2$ | 0,49 | 9,26 |

Von diesen wäßrigen Edelmetalllösungen sind nur diejenigen mit einem pH-Wert größer als 6 bis 7 geeignet. Es hat sich gezeigt, daß die sauren Imprägnierlösungen sich durch die Porosität in der katalytisch aktiven Masse des Reduktionskatalysators sehr schnell über den gesamten Reduktionskatalysator ausbreiten, auch wenn nur ein kurzer Abschnitt an der Austrittsstimfläche in die Imprägnierlösung getaucht wird. Nur die neutralen oder basischen Imprägnierlösungen werden sehr schnell auf dem Reduktionskatalysator fixiert und ergeben eine relativ scharfe Trennlinie zwischen den beiden Katalysatorabschnitten.

Darüber hinaus wird ein Kapillareffekt infolge der begrenzten Durchmesser der Strömungskanäle wirksam, insbesondere bei hochzelligen Katalysatoren. Durch ein unsachgemäßes Imprägnierverfahren kann die Lösung durch Kapillarkräfte in den Strömungskanälen ebenfalls über große Teile des Reduktions-Katalysators gesaugt werden. Dies gilt unabhängig von der jeweils verwendeten Imprägnierlösung, also auch für basische Imprägnierlösungen. Die resultierenden Redox-Katalysatoren sind dann unbrauchbar.

Dieser Kapillarwirkung kann dadurch vorgebeugt werden, daß die Vorläuferverbindungen der Platingruppenmetalle nur in einem begrenzten Lösungsmittelvolumen gelöst werden. Günstig hat sich eine Lösungsmittelvolumen erwiesen, welches 70 bis 100% der Wasseraufnahmekapazität des mit dem Oxidationskatalysators zu imprägnierenden Abschnittes des Reduktionskatalysators entspricht. Darüber hinaus hat es sich als günstig erwiesen, die Oberflächenspannung der Imprägnierlösung mit Hilfe eines Tensids zu vermindern.

Alternativ zu den hier beschriebenen wäßrigen Imprägnierlösungen können auch organische Lösungen von Platinverbindungen zur Imprägnierung eingesetzt werden. Geeignete organische Lösungsmittel sind zum Beispiel Toluol, Alkohole und Tetrahydrofuran.

Die Erfindung wird nun an Hand einiger Beispiele und den Figuren 1 bis 4 erläutert. Es zeigen:

**Figur 1:**    Stickoxidumsätze von SCR-Katalysatoren mit unterschiedlichen Platin-Kontaminationen in Abhängigkeit von der Gastemperatur

**Figur 2:**    Einfluß verschiedener Platin-Imprägnierlösungen auf die axiale Platinverteilung des Redox-Katalysators

**Figur 3:**    Stickoxidumsätze eines SCR-Katalysators in Abhängigkeit von der Gastemperatur

**Figur 4:**    Stickoxidumsätze eines erfindungsgemäßen Redox-Katalysators mit Palladium

**Figur 5:**    Stickoxidumsätze eines erfindungsgemäßen Redox-Katalysators mit Platin

**Beispiel 1:**

Auswirkung einer Platin-Kontamination auf die Reduktionsaktivität eines SCR-Katalysators:

Es wurde der Einfluß einer Kontamination eines konventionellen SCR-Katalysators mit unterschiedlichen Platin-Konzentrationen untersucht. Es kamen vier verschiedene Platin-Konzentrationen zur Anwendung: 0,0, 0,002, 0,01 und 0,02 g Platin pro Liter Katalysatorkörper (g/l).

Zur Herstellung der SCR-Katalysatoren wurde eine wäßrige Beschichtungssuspension auf Basis von Titandioxid angefertigt. Sie wurde in vier Portionen aufgeteilt. Den vier Portionen der Beschichtungssuspension wurden steigende Mengen eines Platinkatalysators zugefügt (Platin auf γ-Aluminiumoxid), so daß in den fertigen Katalysatoren die oben angegebenen Konzentrationen vorlagen.

Anschließend wurden vier Wabenkörper aus Cordierit mit einer Zelldichte von 62 cm$^{-2}$ und einem Volumen von 0,0386 Liter (∅: 25,4 mm, Länge: 76,2 mm) durch Eintauchen in jeweils eine der vier Beschichtungssuspensionen beschichtet, getrocknet und calciniert. Anschließend wurden die vier Wabenkörper mit Vanadin- und Wolframoxid belegt. Damit war die Herstellung der SCR-Reduktionskatalysatoren abgeschlossen.

Die katalytischen Eigenschaften dieser Katalysatoren wurden in einer Modellgasanlage bei Belastung mit einem synthetischen Dieselabgas in Abhängigkeit von der Abgastemperatur vermessen. Das synthetische Abgas hatte die folgende Zusammensetzung:

Tabelle 3:

| Abgaszusammensetzung | |
|---|---|
| Gaskomponente | Konzentration |
| NO | 500 Vol.-ppm |
| $NH_3$ | 450 Vol.-ppm |
| $O_2$ | 5,0 Vol.-% |
| $H_2O$ | 1,3 Vol.-% |
| $N_2$ | Rest |

Der sogenannte alfa-Wert (Molverhältnis $NH_3/NO_x$) dieser Gasmischung betrug 0,9. Auf Grund dieser unterstöchiometrischen Zusammensetzung war ein maximaler Stickoxidumsatz von 0,9 zu erwarten. Im Gegensatz zu realem Dieselabgas enthielt die Synthesegasmischung keine Kohlenwasserstoffe, kein Schwefeldioxid, kein Kohlendioxid und keine Rußpartikel.

Das synthetische Abgas wurde mit einer Raumgeschwindigkeit von 30000 h$^{-1}$ über die Katalysatoren geleitet. Die Umsetzungsraten der Katalysatoren wurden bei fallenden Abgastemperaturen zwischen 500 und 150°C vermessen, um den Einfluß einer Speicherung von Ammoniak durch den SCR-Katalysator zu minimieren. Zwischen 500 und 200° C wurde die Abgastemperatur in Schritten von 50° C verringert, zwischen 200 und 150° C in Schritten von 25° C.

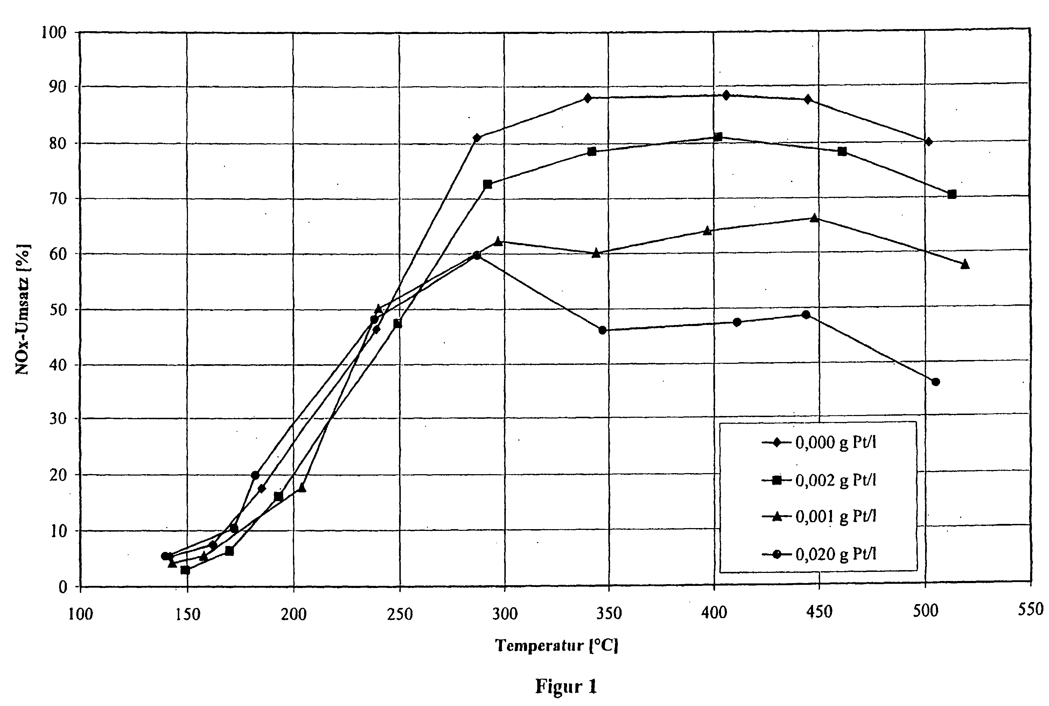

Figur 1 zeigt die an den vier Katalysatoren gemessenen Umsatzgrade für die Stickoxide. Es ist deutlich zu erkennen, daß nur der Katalysator ohne Platin-Kontamination (0,000 g/l) die erwarteten Umsetzungsgrade von nahezu 90% erreicht. Schon bei sehr geringen Platin-Kontaminationen von nur 0,002 g/l vermindert sich der maximale Stickoxidumsatz um 8%.

**Beispiel 2:**

Es wurden vier weitere Wabenkörper mit dem SCR-Katalysator von Beispiel 1 ohne Platin-Kontamination beschichtet. Anschließend wurden die Wabenkörper mit der Austrittsstirnfläche jeweils in verschiedene Platin-Imprägnierlösungen getaucht, um so an der Austrittsseite der Katalysatorkörper eine Oxidationsaktivität für durch die SCR-Beschichtung nicht verbrauchten Ammoniak zu erzeugen.

Hierzu wurde zunächst die Wasseraufnahme des gesamten Katalysatorkörpers bestimmt und daraus die Wassermenge berechnet, die der Katalysatorkörper über 13% der Gesamtlänge, entsprechend 1 cm Länge, aufnehmen würde. Die Wasseraufnahme betrug 8,5 g für das Volumen des Katalysatorkörpers von 0,0386 Liter. Der Imprägnierlösung wurden einige Tropfen eines handelsüblichen Tensids zu Verminderung ihrer Oberflächenspannung zugefügt.

Es wurden vier Imprägnierlösungen mit den vier Platinverbindungen von Tabelle 1 hergestellt. Die Menge der eingesetzten Platinverbindungen wurde so bemessen, daß die zu erwartende Konzentration im Bereich des Oxidationskatalysators 1,41 g/l Pt (40 g/ft,$^3$) entsprach. Die berechnete Menge der Platinverbindungen wurde in ein Gefäß mit planem Boden eingewogen und mit Wasser auf das vorher berechnete Volumen aufgefüllt.

Die Wabenkörper wurden so lange in die Imprägnierlösungen eingetaucht, bis diese vollständig aufgenommen worden waren. Danach wurden die Katalysatoren in einem Gebläse bei 120° C getrocknet. Dabei wurde darauf geachtet, daß der mit Edelmetall imprägnierte Teil des Katalysators an der ausströmenden Seite im Gebläse lag, um eine mögliche Kontamination des nicht imprägnierten Teils des Reduktionskatalysators mit Platin zu vermeiden. Anschließend wurden die Katalysatoren bei 500° C für die Dauer von zwei Stunden im Ofen calciniert.

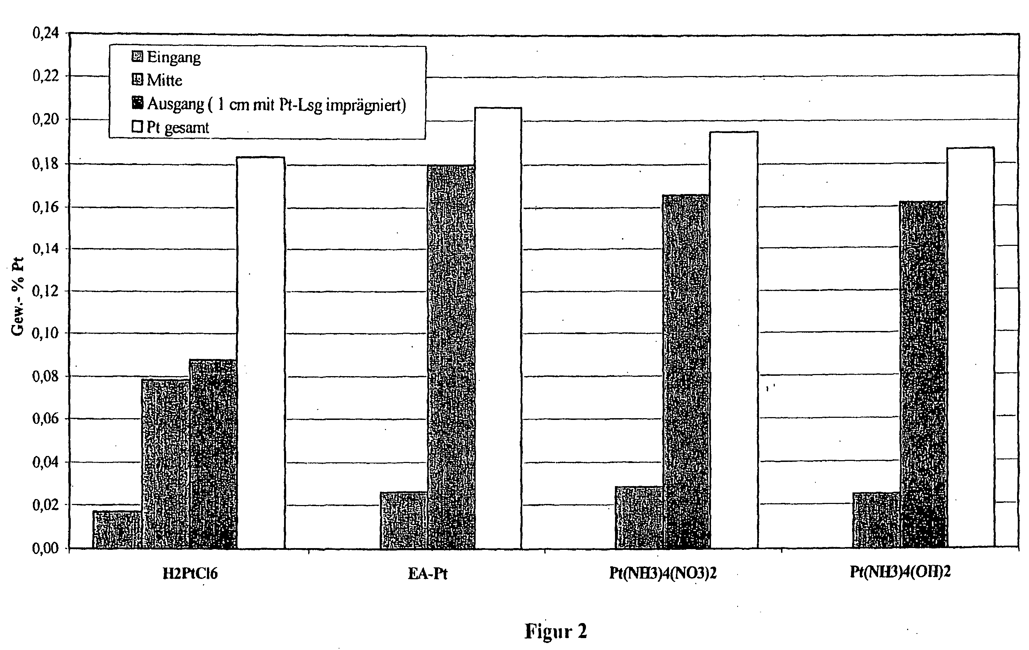

Die so hergestellten Redox-Katalysatoren wurden jeweils in drei gleiche Teile von jeweils 25,4 mm Länge zerschnitten, vermahlen und zu Tabletten verpreßt. An diesen Tabletten wurde der Platingehalt mit Hilfe einer Röntgenfluoreszenzanalyse ermittelt. Die Ergebnisse sind in Figur 2 dargestellt. Bei dem mit $H_2PtCl_6$ imprägnierten Redox-Katalysator findet sich noch eine deutliche Platin-Konzentration im Eingangsdrittel, obwohl die Flüssigkeitsmenge der Imprägnierlösung nur für die Imprägnierung der letzten 10 mm des Katalysatorkörpers berechnet worden war. Bei den drei anderen Katalysatorkörpern, die mit den neutralen oder basischen Platin-Lösungen von Tabelle 1 imprägniert worden waren, findet sich im Eingangsdrittel im Rahmen der Analysegenauigkeit kein Platin. Erst das mittlere Drittel dieser Katalysatorkörper zeigt eine ähnliche Platinkonzentration wie. der erste Katalysatorkörper schon im Eingangsdrittel.

### Beispiel 3:

Es wurden ein weiterer SCR-Katalysator ohne Platin-Kontamination wie in Beispiel 1 auf einem Wabenkörper hergestellt.

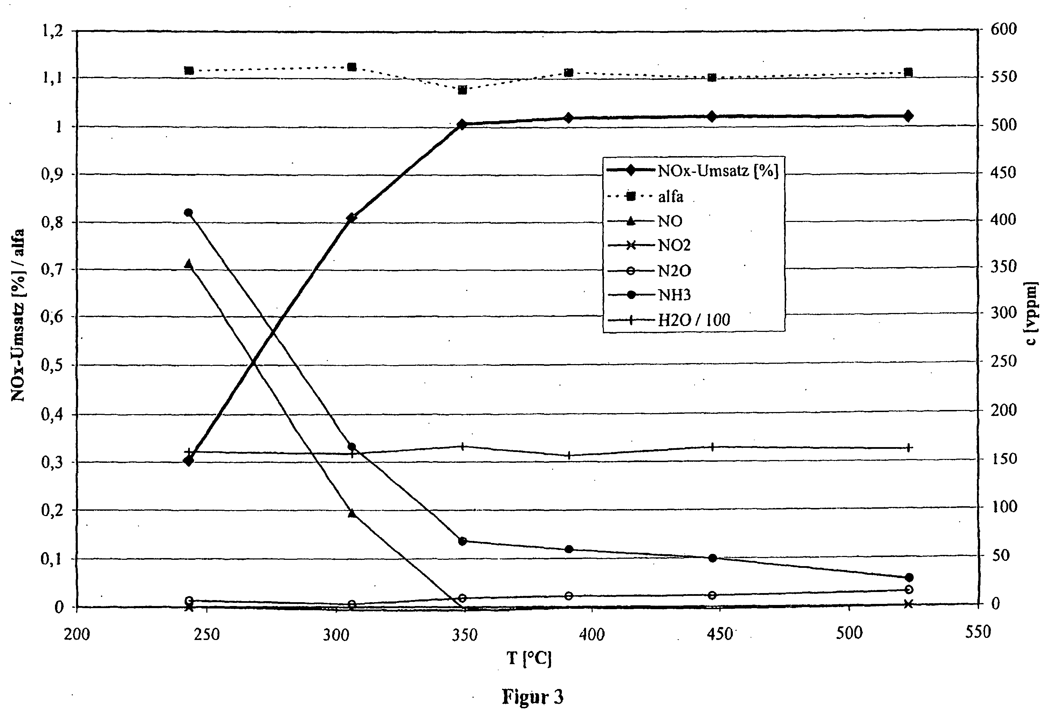

Die katalytischen Eigenschaften dieses Katalysators wurden wie in Beispiel 1 vermessen. Der alfa-Wert wurde allerdings auf 1,1 heraufgesetzt, um einen Ammoniak-Schlupf zu erzeugen. Die Messungen fanden bei einer Raumgeschwindigkeit von 30000 h$^{-1}$ statt. Die Meßergebnisse sind in Figur 3 grafisch dargestellt. Neben der Umsatzkurve für die Stickoxide enthält das Diagramm noch den alfa-Wert der Synthesegasmischung sowie die Gaskonzentrationen von NO, $NO_2$, $N_2O$, $NH_3$ und Wasserdampf in Volumen-ppm (vppm). Auf Grund des überstöchiometrischen Anteils von Ammoniak am Synthesegas tritt auch bei hohen Gastemperaturen noch ein deutlicher Schlupf von nicht verbrauchtem Ammoniak auf. Die Bildung von Lachgas ($N_2O$) ist gering.

### Beispiel 4:

Es wurde ein erfindungsgemäßer Redox-Katalysator mit Palladium als Oxidationskatalysator hergestellt. Hierzu wurde ein reiner SCR-Katalysator wie in Beispiel 1 an seiner Austrittsstirnfläche auf einer Länge von 0,5 cm mit Palladium imprägniert. Die Palladium-Konzentration betrug auf diesem Katalysatorabschnitt 1,41 Gramm pro Liter des Wabenkörpers.

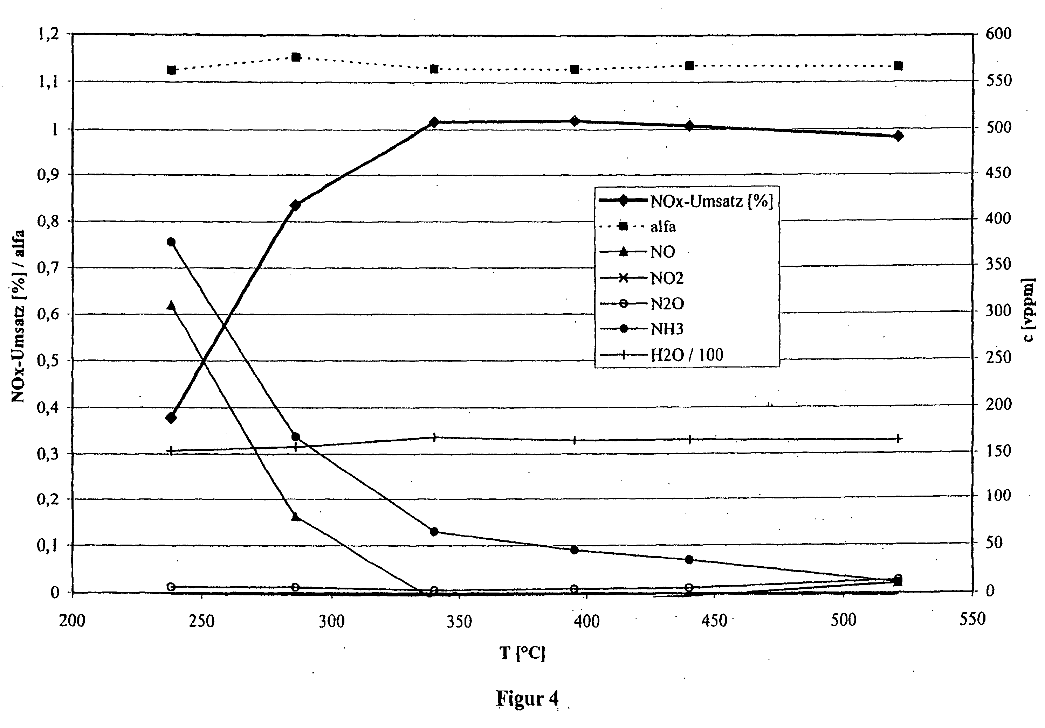

Der Katalysator wurde wie in Beispiel 3 vermessen. Die Meßergebnisse sind in Figur 4 dargestellt. Der Redox-Katalysator mit Palladium weist gegenüber dem reinen SCR-Katalysator von Beispiel 3 einen etwas verminderten Ammoniak-Schlupf auf. Die Bildung von Lachgas ist vernachlässigbar, das heißt der Katalysator weist eine hohe Selektivität auf.

### Beispiel 5:

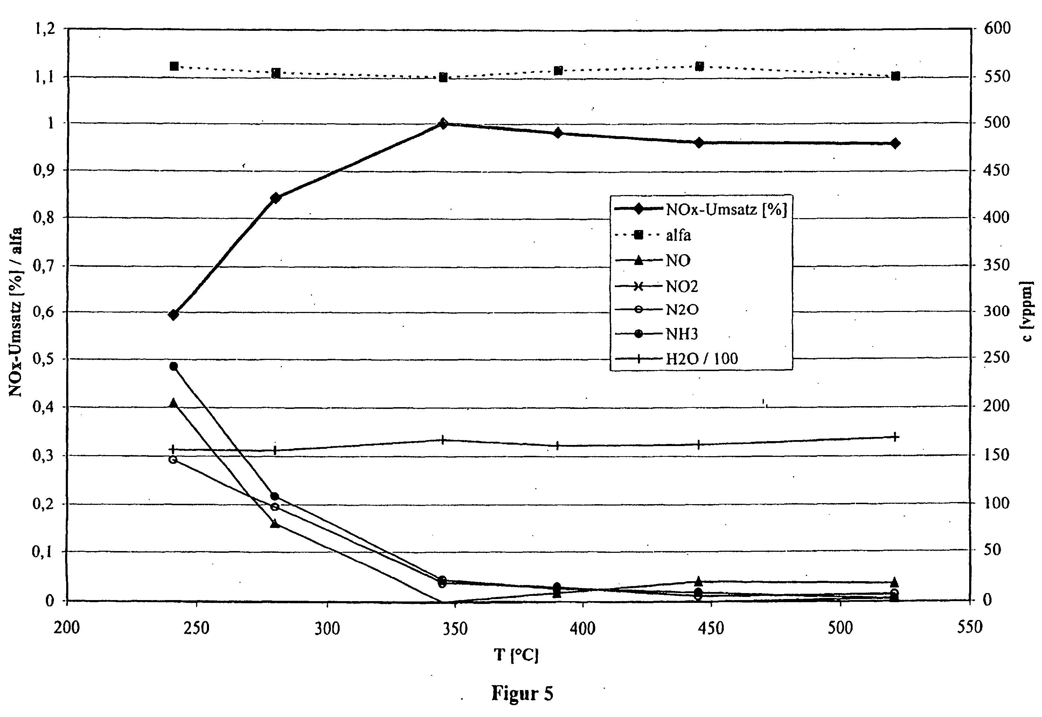

Beispiel 4 wurde wiederholt, jedoch wurde Palladium durch Platin ersetzt. Die Meßergebnisse zeigt Figur 5. Dieser Redox-Katalysator zeigt einen wesentlich verminderten Ammoniak-Schlupf. Allerdings wird dies besonders im unteren Temperaturbereich mit einer etwas stärkeren Bildung von Lachgas erkauft.

### Patentansprüche

**1.** Redox-Katalysator für die selektive katalytische Reduktion der im Abgas von Dieselmotoren enthaltenen Stickoxide mittels Ammoniak, enthaltend einen Reduktionskatalysator, dessen katalytisch aktive Masse auf dem Feststoffsäure-System $TiO_2/WO_3/MoO_3/V_2O_5/SiO_2/SO_3$ basiert und einen Oxidationskatalysator auf der Basis der Platingruppenmetalle Platin und Palladium, wobei der Reduktionskatalysator in Form eines zylindrischen Wabenkatalysators mit einer Länge L sowie mit einer Gaseintritts- und einer Gasaustrittsstirnfläche vorliegt und der Oxidationskatalysator auf einem der Austrittsstirnfläche benachbarten Abschnitt des Reduktionskatalysators aufgebracht ist, wobei die katalytisch aktive Masse des Reduktionskatalysators als Trägermaterial für die Platingruppenmetalle des Oxidationskatalysators dient.

**2.** Redox-Katalysator nach Anspruch 1, wobei

der Oxidationskatalysator von der Gasaustrittsstirnfläche ausgehend auf 1 bis 20% der Länge L des Reduktionskatalysators aufgebracht ist.

3. Redox-Katalysator nach Anspruch 2, wobei
der Reduktionskatalysator in Form eines monolithischen Vollkatalysators vorliegt.

4. Redox-Katalysator nach Anspruch 2, wobei
der Reduktionskatalysator in Form einer katalytisch aktiven Beschichtung auf einem inerten, monolithischen Wabenkörper aus Keramik oder Metall vorliegt.

5. Verfahren zur Herstellung eines Redox-Katalysators nach Anspruch 3 oder 4, wobei
der Oxidationskatalysator durch Imprägnieren der Austrittsstirnfläche des Reduktionskatalysators mit einer wäßrigen, neutralen oder basischen Imprägnierlösung von Verbindungen der Platingruppenmetalle auf den zuvor hergestellten Reduktionskatalysator aufgebracht, getrocknet und calciniert wird.

6. Verfahren nach Anspruch 5, wobei
die Verbindungen der Platingruppenmetalle in einem Lösungsmittelvolumen gelöst werden, welches 70 bis 100% der Wasseraufnahmekapazität des mit dem Oxidationskatalysator zu imprägnierenden Abschnitts des Reduktionskatalysators entspricht.

7. Verfahren nach Anspruch 6, wobei
die Oberflächenspannung der Imprägnierlösung durch Zusatz von Tensiden vermindert wird.

8. Verfahren zur Herstellung eines Redox-Katalysators nach Anspruch 3 oder 4, wobei
der Oxidationskatalysator durch Imprägnieren der Austrittsstirnfläche des Reduktionskatalysators mit einer organischen Imprägnierlösung von Verbindungen der Platingruppenmetalle auf den zuvor hergestellten Reduktionskatalysator aufgebracht, getrocknet und calciniert wird.

9. Verfahren nach Anspruch 8, wobei
die Verbindungen der Platingruppenmetalle in einem Lösungsmittel volumen gelöst werden, welches 70 bis 100% der Lösungsmittel-Aufnahmekapazität des mit dem Oxidationskatalysator zu imprägnierenden Abschnitts des Reduktionskatalysators entspricht.

10. Verfahren nach Anspruch 9, wobei
die Oberflächenspannung der Imprägnierlösung durch Zusatz von Tensiden vermindert wird.

**Claims**

1. A redox catalyst for the selective catalytic reduction of the nitrogen oxides contained in exhaust gas from diesel engines using ammonia, containing a reduction catalyst in which the catalytically active material is based on the solid acid system $TiO_2/WO_3/MoO_3/V_2O_5/SiO_2/SO_3$, and an oxidation catalyst based on the platinum group metals platinum and palladium, wherein the reduction catalyst is present in the form of a cylindrical honeycomb structure catalyst with length L and with a gas inlet and a gas outlet end face and the oxidation catalyst is applied to a section of the reduction catalyst which is adjacent to the outlet end face, wherein the catalytically active material in the reduction catalyst is used as a support material for the platinum group metals in the oxidation catalyst.

2. The redox catalyst according to claim 1, wherein the oxidation catalyst is applied from the gas outlet end face and extends to 1 to 20% of the length L of the reduction catalyst.

3. The redox catalyst according to claim 2, wherein the reduction catalyst is present in the form of a monolithic full catalyst.

4. The redox catalyst according to claim 2, wherein the reduction catalyst is present in the form of a catalytically active coating on an inert, monolithic honeycomb structure made from ceramic or metal.

5. A process for preparing a redox catalyst according to claim 3 or 4, wherein the oxidation catalyst is applied to the previously prepared reduction catalyst by impregnating the outlet end face of the reduction catalyst with an aqueous, neutral or basic impregnation solution of compounds of the platinum group metals, dried and calcined.

6. The process according to claim 5, wherein the compounds of the platinum group metals are dissolved in a volume of solvent which corresponds to 70 to 100% of the water take-up capacity of the section of the reduction catalyst to be impregnated with the oxidation catalyst.

7. The process according to claim 6, wherein the surface tension of the impregnation solution is reduced by adding surfactants.

8. The process for preparing a redox catalyst according to claim 3 or 4, wherein the oxidation catalyst is applied to the previously prepared reduction catalyst by impregnating the outlet end face of the reduction catalyst with an organic impregnation solution of compounds of the platinum group metals, dried and calcined.

9. The process according to claim 8, wherein the compounds of the platinum group metals are dissolved in a volume of solvent which corresponds to 70 to 100% of the solvent take-up capacity of the section of the reduction catalyst to be impregnated with the oxidation catalyst.

10. The process according to claim 9, wherein the surface tension of the impregnation solution is reduced by adding surfactants.

## Revendications

1. Catalyseur redox pour la réduction catalytique sélective des oxydes d'azote contenus dans les gaz d'échappement de moteurs diesel au moyen d'ammoniac, comprenant un catalyseur de réduction dont la masse catalytiquement active est basée sur le système solide acide $TiO_2/WO_3/MoO_3/V_2O_5/SiO_2/SO_3$ et un catalyseur d'oxydation à base des métaux du groupe platine, platine et palladium, le catalyseur de réduction se présentant sous forme d'un catalyseur cylindrique alvéolaire ayant une longueur L ainsi qu'une surface frontale d'entrée des gaz et une de sortie des gaz, et le catalyseur d'oxydation étant monté sur un segment, adjacent à la surface frontale de sortie, du catalyseur de réduction,
dans lequel
la masse catalytiquement active du catalyseur de réduction sert de matériau support pour les métaux du groupe platine du catalyseur d'oxydation.

2. Catalyseur redox selon la revendication 1,
dans lequel
le catalyseur d'oxydation est monté, en partant de la surface frontale de sortie des gaz, sur 1 à 20 % de la longueur L du catalyseur de réduction.

3. Catalyseur redox selon la revendication 2,
dans lequel
le catalyseur de réduction se présente sous forme d'un catalyseur entier monolithique.

4. Catalyseur redox selon la revendication 2,
dans lequel
le catalyseur de réduction se présente sous forme d'un revêtement catalytiquement actif sur un corps alvéolaire inerte, monolithique, en céramique ou en métal.

5. Procédé de fabrication d'un catalyseur redox selon la revendication 3 ou 4,
dans lequel
le catalyseur d'oxydation est monté, séché et calciné sur le catalyseur de réduction préalablement fabriqué, par imprégnation de la surface frontale de sortie du catalyseur de réduction avec une solution d'imprégnation aqueuse, neutre ou basique, de combinaisons des métaux du groupe platine.

6. Procédé selon la revendication 5,
dans lequel
des combinaisons de métaux du groupe platine sont dissoutes dans un volume de solvant qui correspond à 70 à 100 % de la capacité d'absorption d'eau du segment du catalyseur de réduction à imprégner avec le catalyseur d'oxydation.

7. Procédé selon la revendication 6,
   dans lequel
   la tension de surface de la solution d'imprégnation est diminuée par addition de tensioactifs.

8. Procédé de fabrication d'un catalyseur redox selon la revendication 3 ou 4,
   dans lequel
   le catalyseur d'oxydation est monté, séché et calciné sur le catalyseur de réduction préalablement fabriqué, par imprégnation de la surface frontale de sortie du catalyseur de réduction avec une solution d'imprégnation organique de combinaisons de métaux du groupe platine.

9. Procédé selon la revendication 8,
   dans lequel
   les combinaisons de métaux du groupe platine sont dissoutes dans un volume de solvant qui correspond à 70 à 100 % de la capacité d'absorption de solvant du segment du catalyseur de réduction à imprégner avec le catalyseur d'oxydation.

10. Procédé selon la revendication 9,
    dans lequel
    la tension de surface de la solution d'imprégnation est diminuée par addition de tensioactifs.

Figur 1

Figur 2

Figur 3

Figur 4

**Figur 5**